(19) Europäisches Patentamt
European Patent Office
Office européen des brevets

(11) **EP 3 722 781 B1**

(12) **EUROPEAN PATENT SPECIFICATION**

(45) Date of publication and mention
of the grant of the patent:
**26.01.2022 Bulletin 2022/04**

(21) Application number: **18885474.9**

(22) Date of filing: **30.11.2018**

(51) International Patent Classification (IPC):
***G01N 15/06*** (2006.01)

(52) Cooperative Patent Classification (CPC):
**G01N 15/0656; G01N 15/0205; G01N 15/06;
G01N 15/1459;** G01N 2015/003; G01N 2015/0053;
G01N 2015/0294; G01N 2015/0668;
G01N 2015/0693; G01N 2015/1486;
G01N 2015/1493; G01N 2015/1497

(86) International application number:
**PCT/CN2018/118697**

(87) International publication number:
**WO 2019/109872 (13.06.2019 Gazette 2019/24)**

(54) **DETECTION SYSTEM AND METHOD FOR CONCENTRATION FLUID NONMETAL PARTICLES**

DETEKTIONSSYSTEM UND VERFAHREN ZUM KONZENTRIEREN FLÜSSIGER
NICHTMETALLTEILCHEN

SYSTÈME DE DÉTECTION ET PROCÉDÉ CONCERNANT LA CONCENTRATION DE PARTICULES
NON MÉTALLIQUES DE FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2017 CN 201711267524**

(43) Date of publication of application:
**14.10.2020 Bulletin 2020/42**

(73) Proprietor: **Fatri United Testing & Control
(Quanzhou)
Technologies Co., Ltd.
Fujian 362000 (CN)**

(72) Inventors:
• **NIE, Yongzhong
Fujian 361008 (CN)**
• **ZHANG, Zhongping
Fujian 361008 (CN)**

(74) Representative: **Angerhausen, Christoph
Boehmert & Boehmert
Anwaltspartnerschaft mbB
Pettenkoferstrasse 22
80336 München (DE)**

(56) References cited:
CN-A- 102 486 448    CN-A- 102 636 422
CN-A- 103 308 431    CN-A- 103 592 208
CN-A- 108 051 348    CN-U- 202 002 870
JP-B2- 3 130 867     US-A1- 2009 051 350

**Description**

**TECHNICAL FIELD**

The present disclosure relates to the technical field of fluid detection, in particular to a system for detecting a concentration of non-metallic particles in a fluid and a detection method using the system.

**BACKGROUND**

At present, there are many methods for detecting a concentration of metal particles in a fluid, but there are few methods for detecting a concentration of non-metallic particles in the fluid. Some methods directly measure the non-metallic particles, but due to different shapes and materials of the particles in the fluid which affect each other easily, often result in poor measurement results. Therefore, it may be a preferred implementation to measure information of total particles in the fluid and information of metal particles and then make a subtraction.

For the detection of metal particles in the fluid, it is a more common method to detect metal particles using a principle of electromagnetic induction. Specifically, a usual device for detecting metal particles using the principle of electromagnetic induction may often use two reversely wound excitation coils as an excitation source to generate two magnetic fields with a same strength and reverse directions. In absence of magnetic field disturbance, a net magnetic field of a middle of the two coils may be zero. An induction coil that induces a change in the magnetic field is wound in the middle, so as to induce the magnetic field disturbance caused by the metal particles. Although this device can realize the electromagnetic detection of metal particles, the device still has the following defects:

(1) In order to establish a magnetic field balance and induce a metal particle magnetic field signal, two reverse excitation coils and one induction coil may be needed, whose design makes the sensor length longer, which is not conducive to the actual design, preparation and installation;

(2) Only one magnetic induction coil is used. When electromagnetic induction is used to balance the magnetic field, the magnetic field outside the excitation coils (exciting coils) may be significantly attenuated. When the magnetic field disturbance generated by the small particles on the excitation coils is reflected on the external induction coil, it often has been attenuated a lot, so the detection accuracy of fine particles is insufficient, which affects the detection effect, and thus affects the detection accuracy of the concentration of the particles in the fluid.

For the detection of the particles in the fluid, in the existing technology of particle morphology detection devices, the laser tube is often fixed, and because the particles are different in size, the distribution of the particles in the same oil cross section is often not uniform. Therefore, the fixed laser tube setting may have a single detection plane, which is difficult to accurately detect the particle morphology in the oil, and makes the accuracy of the measurement of the concentration of the particles in the oil insufficient.

A fluid particle counting device, which utilizes a combination of photo electric detection and an electromagnetic induction method is disclosed by the CN 102486448 A. Another similar fluid particle counting device is disclosed by the CN 202002870 U.

**SUMMARY**

In order to overcome shortcomings of the prior art, the technical problem solved by the present disclosure is (1) how to provide a detection system that can improve a detection accuracy of a concentration of non-metallic particles in a fluid; and (2) how to provide a detection method that can use the detection system to make the concentration detection more accurate.

In order to solve the above first technical problem, the content of the technical solution adopted by the present disclosure is as follows.

A system for detecting a concentration of non-metallic particles in a fluid is provided, wherein the system includes a particle morphology detection device, a metal particle detection device and a detection pipeline, the particle morphology detection device and the metal particle detection device are connected to each other and are wound on the detection pipeline;

Unlike the systems of the prior art, the particle morphology detection device includes: a laser tube for outputting an incident light beam; and a scatter detector for detecting an emergent light beam from the fluid;

The metal particle detection device includes a signal detection system, one or more excitation coils, and a positive even number of induction coils, the excitation coils are connected to the signal detection system and are wound on the detection pipeline; the induction coils are all connected to the signal detection system and are wound on the excitation coils sequentially and in reverse to each other;

The detection pipeline allows incidence of a light beam from the particle morphology detection device to the fluid in the detection pipeline and emergence of the light beam from the fluid to the particle morphology detection device.

It should be noted that for the metal particle detection device, in the existing technical solutions of electromagnetic induction devices for detecting particles, the installation thereof usually requires two reverse excitation coils and one induction coil, and the two excitation coils are wound the two ends of the pipeline in reverse, and the induction coil is wound between the two excitation coils. However, in the present technical solution, the arrangement of the device that the induction coils are wound outside the excitation coils can achieve the effects of the installation being convenience and the overall length of the sensor being greatly shortened, which is convenient for preparation and use.

The excitation coils are connected to the signal detection system. The signal detection system inputs a sinusoidal alternating signal at both ends of the excitation coils to generate an alternating magnetic field to drive the induction coils. In addition, the induction coils are wound on the detection pipeline, which can detect the situation of the particles, and the sensor does not need to directly contact the liquid in the pipeline, which makes the test more convenient.

In order to achieve the effect of improving the detection accuracy, the inventor adopts a scheme of a positive even number of magnetic induction coils in the present disclosure. In the existing technical solutions, only one magnetic induction coil is usually used for winding. Although the use of only one magnetic induction coil seems to save costs, in fact, because the induction coil is located in the middle between the two excitation coils to induce the magnetic field disturbance generated by the particles passing through the excitation coils, the induction coil may be far away from the excitation coils, which often causes magnetic field attenuation and results in insufficient accuracy of the measured size of the particles.

In the present technical solution, the excitation coils and the positive even number of the induction coils are used to wind the excitation coils to ensure the detection accuracy. The excitation coil is used to generate the magnetic field, so it is preferable to use one excitation coil for winding. The use of the positive even number of the induction coils (e.g., two, or a group of induction coils) can be adapted to an algorithm set by the inventor later, which calculates the concentration of the metal particles based on observation of the magnetic field changes generated by the metal particles passing through the two induction coils.

The induction coils are sequentially wound on the excitation coil. This setting can quickly detect the magnetic field disturbance generated when the particles passes through the induction coils, such that the function of detecting the metal particles may be achieved.

The induction coils are wound on the excitation coil in reverse. Due to the proximity of the two induction coils, the environment can be considered consistent, which can suppress temperature drift and electromagnetic interference in a complex and harsh environment, such that signal stability may be improved and system performance may be further improved.

It should be noted that a coil refers to a coil connected to the signal detection system at both ends and wound on the detection pipeline.

It should be noted that the sequential winding means that in a direction of the detection pipeline, for example, after the winding of one of the two induction coils is completed, the other induction coil is wound at a next position in the direction, that is, the induction coils are not overlapped with each other when being wound on the detection pipeline, but are independently wound on the detection pipeline.

It should be noted that the reverse winding means that when the two induction coils are wound, the two induction coils are wound outside the excitation coil without overlapping each other, and one is wound clockwise and the other is wound counterclockwise.

It should be noted that the detection of the particles herein refers to the detection of the metal particles by means of electromagnetic induction, so as to detect the flow of the metal particles to facilitate further analysis of data such as the concentration of the metal particles in the liquid.

It should be noted that the signal detection system is used to detect electromagnetic induction. In an optional embodiment, the signal detection system may include a control circuit board, a signal output port, and the like. The composition of the signal detection system should not be limited, and the mechanism that can detect the electromagnetic changes of the induction coils should be regarded as belonging to the signal detection system.

Preferably, the number of the induction coils may be two or four or six.

In order to achieve an optimal balance between manufacturing costs and detection accuracy, it is preferable to set the number of the induction coils to two.

Or, if the number of the induction coils is set to four or six, etc., an average value may be calculated by performing multiple measurements during the measurement process, which can improve the reliability of detection.

Preferably, the number of the excitation coils may be two or more, and each excitation coil is wound on the detection pipeline in a same direction.

It should be noted that the same-direction winding refers to that each excitation coil is wound clockwise or counterclockwise on the detection pipeline. In this way, the strength of the magnetic field can be increased, and at the same time, the mutual interference between the excitation coils which affects the stability of the magnetic field can be prevented by the same-direction winding.

Further preferably, the excitation coils and/or the induction coils are wound in at least one layer.

The excitation coils and/or the induction coils may be wound in at least one layer (that is, multiple layers), which can further enhance the strength of the magnetic field generated by the excitation coils, and the signals generated on the induction coils may be more obvious, which is beneficial to improve the detection accuracy of the metal particles.

Preferably, a spacer ring sleeve may be further disposed between the excitation coils and the induction coils.

Further preferably, a material of the spacer ring sleeve may be a non-magnetically conductive material.

The spacer ring sleeve may be installed between the excitation coils and the induction coils to isolate the excitation coils and the induction coils. The non-magnetic material may be selected here, which is mainly used for the isolation of the excitation coils and the induction coils during the winding of the production process. Further, in the process of inducing the magnetic field disturbance caused by the metal particles, the magnetic field loss between the induction coils and the excitation coils may be minimized. It is beneficial to improve the detection accuracy of the metal particles, so the non-magnetic material is selected here. At the same time, the spacer ring sleeve may serve as a skeleton for winding the induction coils, which can improve the flatness of the wound induction coils.

Preferably, a shield ring may be further disposed outside the induction coils.

The shield ring disposed outside the induction coils may isolate the external magnetic field and resist the interference of the external magnetic field, so that the detection results may be more accurate and the detection effect may be better.

Preferably, the particle morphology detection device further comprises a driving device for driving the laser tube to move.

It should be noted that for the particle morphology detection device, in the existing particle morphology detection devices, the laser tube may be fixed, and the output light beams may also be fixed at a certain position, so the detected particles may be limited to the particles at that position. Due to different mass of the particles, it will cause the particles to stay in different layers in the fluid according to mass sizes. The existing device will result in a narrower detection range, and the detected particles may be relatively local, such that the transparency of the fluid and the concentration of the particles is not accurate. Therefore, the inventor innovatively proposes to set the previously fixed laser tube to be movable, and the driving device is used to drive the laser tube to move, and thus the light beams output by the laser tube can cover the detection pipeline, such that the particles passing through the entire detection pipeline may be detected and the technical effect of improving the detection accuracy may be further achieved.

Preferably, the driving device may be a motor.

As one of the embodiments, the motor may be provided in the detection device to drive the laser tube to move, thereby causing the output incident beams to move.

Further, a movement mode of the laser tube may be a screw movement or a gear movement

The screw movement refers to that, in one of the embodiments, a nut may be provided on the laser, and the motor may drive a screw to cooperate with the nut to achieve the movement.

The gear movement refers to that both the motor and the laser tube may be provided with gear-like structural components to cooperate with each other to achieve the movement.

Preferably, a movement range of the laser tube may be a diameter distance of a cross section of the detection pipeline.

The movement range of the laser tube may be set to the diameter distance of the cross section of the detection pipeline, which can cover the detection pipeline to a greater extent. Further, the fluid in the pipeline can be fully covered by the light beams, and thus a full detection of each layer of the particles may be achieved and the detection accuracy may be improved.

Preferably, a movement of the laser tube may be a movement at a constant speed.

In the process of the movement at the constant speed, the sampled signals of the particles will be relatively stable, such that the detection and analysis results may be more accurate.

Preferably, a disposed position of the scatter detector may be not on a same straight line as output beams of the laser tube.

The scatter detector may be used to identify the size and form of the particles. In a preferred embodiment, the disposed position of the scatter detector may be not on the same straight line as the output beams of the laser tube. Because when the disposed position of the scatter detector is on the same straight line as the output beams of the laser tube, the sensitivity of the scatter detector receiving the scattered beams may be low, and the scatter detector may be easily interfered by the direct beams. However, when the disposed position of the scatter detector is not on the same straight line as the output beams of the laser tube, the interference of the direct beams may be reduced and the detection of the scattered beams may be more accurate.

Further preferably, the scatter detector may be disposed at a position in a vertical plane of the output beams of the laser tube, and three position points of the scatter detector, the detection pipeline, and the laser tube may form a right-angle shape.

Experiments show that with the setting of the above positional relationship, the interference of the direct beams can be avoided to a greater extent, and the detection of the scattered beams may be more accurate.

In order to solve the above second technical problem, the content of the technical solution adopted by the present disclosure may be as follows.

A method for detecting a concentration of non-metallic particles in a fluid using the system described above is provided, wherein the method includes the following steps:

S1: detecting a concentration of particles in the fluid, including:

S11: introducing a pure fluid into the detection pipeline, and acquiring a scattered background noise value $U_{background-noise}$ output by the particle morphology detection device;

S12: introducing the fluid under test into the detection pipeline, acquiring a scattered signal output by the particle morphology detection device, and acquiring a voltage signal of a standard particle;

S13: performing signal sampling on the fluid for a period of time, extracting a valid signal $U_x$ from sampled signals, and performing a threshold analysis on the valid signal $U_x$ obtained by sampling to obtain a number of particles appearing during the period of time;

S14: acquiring the concentration of the particles in the fluid based on the number of the particles acquired in S13; and,

S2: detecting a concentration of metal particles in the fluid, including:

S21: acquiring an output signal of the signal detection system to obtain a voltage amplitude change;

S22: detecting the concentration of the metal particles based on the obtained voltage amplitude change; and,

S3: detecting the concentration of the non-metallic particles in the fluid, including:

acquiring the concentration of the particles in the fluid obtained in S1 and the concentration of the metal particles in the fluid obtained in S2, and acquiring the concentration of the non-metallic particles in the fluid by subtraction: the concentration of the non-metallic particles in the fluid = the concentration of the particles in the fluid - the concentration of the metal particles in the fluid.

It should be noted that the period of time in S 1 may refer to any period of time, which can be selected according to actual conditions.

In order to solve the technical defects mentioned in the background art and achieve a more accurate detection of the concentration of the non-metallic particles in the fluid, the inventor has made the following improvements:

(1) The particle morphology detection device is improved and applied, and the detection accuracy of the concentration of the particles in the fluid is improved.

(2) The metal particle detection device is improved, and the detection accuracy of the concentration of the metal particles in the fluid is improved.

(3) The method of detecting the concentration of the particles in the fluid is improved, including acquiring the scattered background noise value $U_{background-noise}$ output by the detection device, and removing the influence of the background noise value in the subsequent detection and calculation processes, such that the accuracy of the detection and calculation of the concentration of the particles in the fluid is improved.

With the above improvements, the detection accuracy of the concentration of the non-metallic particles in the fluid may be improved.

Preferably, in S1, a particle with a particle diameter of $10\mu m$ may be selected as the standard particle, and the voltage signal corresponding to the standard particle may be $U_{10\mu m}$.

In this technical solution, preferably selecting a particle with a diameter of $10\mu m$ as the standard particle can improve the detection accuracy on the one hand and improve the detection sensitivity on the other hand. If the particles are too large, the detection accuracy of the subsequent calculated concentration will be reduced, and if the particles are too small, the detection sensitivity of the device will be reduced, resulting in the situation that the particles cannot be detected. Therefore, the inventor uses the particle with the diameter of $10\mu m$ as the standard particle to effectively balance the detection accuracy and the detection sensitivity, making the detection process more accurate.

Preferably, in S1, the extracting the valid signal may include: comparing the sampled signals with the scattered background noise value and selecting a signal greater than the scattered background noise value as the valid signal.

In this technical solution, the valid signal needs to be selected as a basis for subsequent calculations, otherwise it will affect the accuracy of the detection and calculation results. The inventor chooses a simple and effective way to select the valid signal, that is, to compare the sampled signals with the previously acquired scattered background noise value, and use a signal greater than the scattered background noise value as the valid signal, so that the sampled signals may be more practical, and the subsequent measurement results may be more accurate.

Preferably, the acquiring the number of the particles by threshold analysis in S13 may include:

comparing the sampled signals $U_x$ with the scattered background noise value $U_{background-noise}$; incrementing a count of the number of particles by 1 when $Ux - U_{background-noise} > 0$; and incrementing the count of the number of particles by 0, and when $Ux - U_{background-noise} < 0$.

In this step, the inventor preferably chooses a counting way of comparing the signal values with the background noise value rather than counting the numbers read from the signal values, which can eliminate errors caused by the background noise value. Only when $U_x - U_{background-noise} > 0$, the signals may be counted as particles, such that the detection results may be more accurate and the detection accuracy of the concentration of the particles may be improved.

Preferably, the acquiring the concentration of the particles in S14 may include:

S141: calculating a volume $V_x$ of an unknown particle:

$$V_X = K * V_{10\mu m} * \sqrt{\frac{U_X - U_{background-noise}}{U_{10\mu m} - U_{background-noise}}} \quad ,$$

wherein $V_x$ may be the volume of the unknown particle; K may be a sensor correction coefficient; $V_{10\mu m}$ may be a volume of the standard particle; $Ux$ may be an output voltage amplitude value of the unknown particle; $U_{10\mu m}$ may be an output voltage amplitude value of the standard particle;

S 142: acquiring the concentration of the particles in the fluid:

acquiring a flow velocity $v$ of the fluid and a cross-sectional area S of the detection pipeline, converting the number of the particles appearing during the period of time t and the volumes of the particles into a total mass $m_{total}$, and obtaining the concentration $c_{total}$ of the particles by the following formula:

$$c_{total} = \frac{m_{total}}{v * t_{total} * S} \quad .$$

It should be noted that the sensor correction coefficient K may refer to that, in a calibration process of the sensor, it is inevitable to have a shift of the background noise value and a measurement error, the correction coefficient K for fine adjustments may be introduced herein to make fine adjustments. It is also possible that when selecting the standard particle, the particle is not completely standard, resulting in some subtle volume calculation errors, which can be corrected together with the introduction of the correction coefficient.

In this step, the consideration of removing the influence of the background noise value may be included, so that the detection results may be more accurate. For example, the calculation formula of the particles may include the factors of $U_x$ minus $U_{background-noise}$ and $U_{10\mu m}$ minus $U_{background-noise}$, such that the calculated volume of the particle may be closer to the actual value and the calculation accuracy of the concentration of the particles in the fluid may be improved.

Preferably, the detecting the concentration of the metal particles in S2 may include:

acquiring a flow velocity $v_{metal}$ of the metal particles passing through the induction coils;
acquiring a mass $m_{metal}$ of the metal particles;
based on the flow velocity $v_{metal}$, the mass $m_{metal}$ of the metal particles, a period of passing time $t_{metal}$ and the cross-sectional area S of the detection pipeline, calculating the concentration $c_{metal}$ of the metal particles by the following formula:

$$c_{metal} = \frac{m_{metal}}{v * t_{metal} * S} \quad .$$

In the process of acquiring the mass $m_{metal}$ of the metal particles, in a single-layer densely wound coil, the induced voltage E caused by the metal particle passing through the spiral induction coil may be proportional to the volume V, magnetic permeability, and the flow velocity $v_{metal}$ of the particle, and may be proportional to the third power of the number of turns of the wound coil. With quantitative analysis of the output signals of the sensor, the volume and mass of the metal particle passing through the oil pipeline can be calculated.

It should be noted that the time $t_{metal}$ refers to a time required for the metal particles to pass through a certain distance in the pipeline, which may correspond to a time elapsed between different amplitude values, or may be a time difference between the moments of the different amplitude values.

Preferably, the acquiring the flow velocity $v_{metal}$ of the metal particles may include:

recording respectively a time instant when a voltage amplitude value as measured by the signal detection system when the metal particles pass through a set of induction coils is at a highest point of a positive half cycle and a time instant when the voltage amplitude value is at a zero-crossing point, and calculating a time difference $\Delta T1$ and a corresponding length $L1$ of the induction coils; recording respectively a time instant when the voltage amplitude value is at a zero-crossing point and a time instant when the voltage amplitude value is at a highest point of a negative half cycle, and calculating a time difference $\Delta T2$ and a corresponding length $L2$ of the induction coils; measuring the flow velocity based on a formula:

$$v_{metal} = \frac{\dfrac{k1 * L1}{\Delta T1} + \dfrac{k2 * L2}{\Delta T2}}{2}.$$

It should be noted that $L1$ may refer to a length of the induction coils passed by the metal particles between the time instant when the voltage amplitude value is at the highest point of the positive half cycle and the time instant when the voltage amplitude value is at the zero-crossing point; and $L2$ may refer to a length of the induction coils passed by the metal particles between the time instant when the voltage amplitude value is at the zero-crossing point and the time instant when the voltage amplitude value is at the highest point of the negative half cycle.

$k1$ may refer to a correction coefficient when passing through one coil; and $k2$ may refer to a correction coefficient when passing through another coil.

Because that different factors (for example, the wire (thickness and materials) of each oil sensor, the number of turns of the wound coils, the interaction of the two induction coils, etc.) may affect the output signals and the output signals are not in the middle of the induction coils, such that the correction coefficients $k1$ or $k2$ may be introduced to correct it.

More specifically, when the ferromagnetic particles pass through the two induction coils, they sequentially pass through the induction coil 1 and the induction coil 2. When passing through the induction coil 1, if the influence of the induction coil 2 on the ferromagnetic particles is not considered, the highest point of the output signal should be in the middle part of the induction coil 1, and after the induction coil 2 is introduced, the magnetic field generated by the induction coil 2 will affect the highest point of the output signal, causing it to be slightly offset.

Preferably, when there are multiple sets of the induction coils, the flow velocity $v_{metal}$ of the metal particles passing through the induction coils may be an average value of flow velocities of the metal particles passing through each set of the induction coils.

For example, in S1, the flow velocity $vgn$ (wherein $n$ is a positive integer) of the metal particles passing through the $gn^{th}$ set of the induction coils may be calculated respectively, and the flow velocity $v_{metal}$ is an average value of the flow velocities of each set of induction coils:

$$v_{metal} = \frac{vg1 + vg2 + \cdots + vgn}{n}.$$

The method of calculating the average value can improve the calculation accuracy of the flow velocity and make the calculation results more accurate.

Preferably, a frequency of acquiring the output signal of the signal detection system in S21 may be once every 1ms.

The beneficial effects of the frequency of acquiring being once every 1ms may be that: the frequency of the output signal may be 500Hz, and according to the sampling theorem, the sampling frequency must be greater than twice the highest frequency of the signal in order to retain the complete information of the signal without distortion, so the sampling frequency of 1K is selected here, that is, 1000 valid signals (1ms each) are sampled within 1s for analysis.

Compared with the prior art, the beneficial effects of the present disclosure may be as follows.

1. The detection system integrates the metal particle detection device and the particle morphology detection device, and the relevant information of the non-metallic particles in the fluid is directly obtained via the detection results of the above two devices, and the process of obtaining the information is convenient, fast and accurate;

2. The induction coils are wound outside of the excitation coils of the metal particle detection device in the detection system, convenient installation may be achieve and the overall length of the sensor may be greatly shortened, which is convenient for preparation and use;

3. The induction coils of the metal particle detection device in the detection system is wound on the detection pipeline, the situation of the particles to be measured may be detected without directly contacting the sensor with the liquid in the pipeline, making the detection more convenient;

4. The metal particle detection device in the detection system uses at least two induction coils to wind the excitation coil to ensure the detection accuracy;

5. The metal particle detection device in this detection system may adopt the spacer ring sleeve disposed between the excitation coils and the induction coils to isolate the excitation coils and the induction coils, and reduce the magnetic field loss between the induction coils and the excitation coils; at the same time, the spacer ring sleeve may serve as the skeleton for winding the induction coils, which can improve the flatness of the wound induction coils;

6. The metal particle detection device in the detection system may be provided with the shield ring outside the induction coils to isolate the external magnetic field and resist the interference of the external magnetic field, so that the detection results may be more accurate and the detection effect may be better;

7. The particle morphology detection device in the detection system may set the laser tube to be movable, so that the light beams output by the laser tube can cover the detection pipeline, thereby detecting the particles passing through the entire detection pipeline and further achieving the technical effect of improving the detection accuracy;

8. The particle morphology detection device in the detection system may preferably include a motor, the motor may be connected to the laser tube, thereby driving the laser tube to move, and thus the laser tube can be movable;

9. The particle morphology detection device in the detection system may set the movement range of the laser tube to the diameter distance of the cross section of the detection pipeline, which can cover the detection pipeline to a greater extent, so that the fluid in the pipe can be fully covered by the light beams, and thus a full detection of each layer of the particles may be achieved and the detection accuracy may be improved.;

10. For the particle morphology detection device in the detection system, the movement of the laser tube may be the movement at the constant speed, and in the process of the movement at the constant speed, the sampled signals of the particles will be relatively stable, such that the detection and analysis results may be more accurate;

11. For the detection method of the present disclosure, in the step of calculating the concentration of the particles, the consideration of removing the influence of the background noise value may be included, so that the calculated volume of the particle may be closer to the actual value, and the calculation accuracy of the concentration of the particles in the fluid may be improved;

12. For the detection method of the present disclosure, selecting a particle with a diameter of $10\mu m$ as the standard particle can improve the detection accuracy on the one hand and improve the detection sensitivity on the other hand;

13. For the detection method of the present disclosure, the sampled signal may be compared with the previously acquired scattered background noise value, and the signal greater than the scattered background noise value may be used as the valid signal, so that the sampled signals may be more practical and the subsequent measurement results may be more accurate;

14. For the detection method of the present disclosure, the inventor chooses the counting way of comparing the signal values with the background noise value rather than counting the numbers read from the signal values, so that the detection results may be more accurate and the detection accuracy of the concentration of the particles may be improved.

The above description is only an overview of the technical solutions of the present disclosure. In order to make the technical means of the present disclosure more clearly and thus the technical means may be implemented according to the content of the specification, and in order to make the above and other objects, features and advantages of the present disclosure more obvious and understandable, in the following, the preferred embodiments are described in detail in conjunction with the drawings.

## BRIEF DESCRIPTION OF THE DRAWINGS

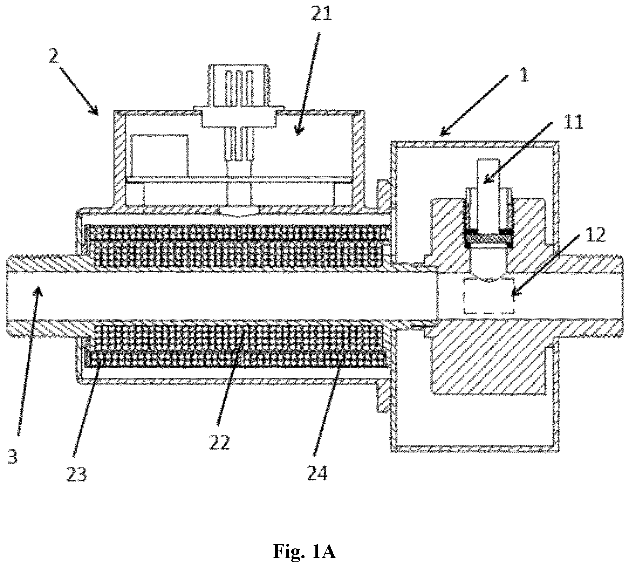

Fig. 1A is a schematic cross-sectional structure diagram of a preferred embodiment of the detection system of the present disclosure;

Fig. IB is a right-side view of the particle morphology detection device in the detection system of Fig. 1A;

Fig. 2 is a schematic cross-sectional structure diagram of a first preferred embodiment of the metal particle detection device in the detection system of the present disclosure;

Fig. 3 is a schematic cross-sectional structure diagram of a second preferred embodiment of the metal particle detection device in the detection system of the present disclosure;

Fig. 4 is a partially enlarged schematic view of area A in Fig. 3;

Fig. 5 is a schematic diagram of an electromagnetic induction test of the metal particle detection device in the detection system of the present disclosure;

Fig. 6 is a voltage output change curve corresponding to the schematic diagram of Fig. 5;

Fig. 7 is a schematic structural diagram of a preferred embodiment of the particle morphology detection device in the detection system of the present disclosure;

Wherein, the reference signs may be as follows: a particle morphology detection device 1; a metal particle detection device 2; a detection pipeline 3; a laser tube 11; a scatter detector 12; a motor 13; a gear 131; a rack 132; a signal detection system 21; excitation coils 22; a first induction coil 23; a second induction coil 24; a spacer ring sleeve 25; a shield ring 26; a particle a; a particle b.

## DETAILED DESCRIPTION

In order to further illustrate the technical means and effects adopted by the present disclosure that achieve the intended purpose, the specific implementations, structures, features, and functions of the present disclosure are described below in detail with reference to the drawings and preferred embodiments as follows.

**Example 1 (a system for detecting a concentration of non-metallic particles in a fluid)**

As shown in Fig. 1A, a schematic cross-sectional structure diagram of a preferred embodiment of a system for detecting a concentration of non-metallic particles in a fluid of the present disclosure is illustrated. The system includes a particle morphology detection device 1, a metal particle detection device 2 and a detection pipeline 3, the particle morphology detection device and the metal particle detection device are connected to each other and are wound on the detection pipeline;

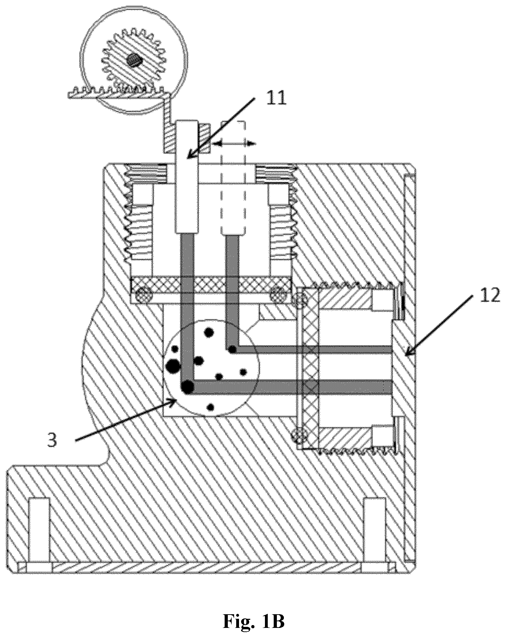

As shown in Fig. 1A and Fig. 1B, the particle morphology detection device includes: a laser tube 11 for outputting an incident light beam; and a scatter detector 12 for detecting an emergent light beam from the fluid;

The metal particle detection device includes a signal detection system 21, an excitation coil 22, and two induction coils (a first induction coil 23 and a second induction coil 24, respectively). The excitation coil is connected to the signal detection system and is wound on the detection pipeline; the induction coils are all connected to the signal detection system and are wound on the excitation coil sequentially and in reverse to each other;

The detection pipeline allows incidence of a light beam from the particle morphology detection device to the fluid in the detection pipeline and emergence of the light beam from the fluid to the particle morphology detection device.

The above is one of the preferred embodiments of the basic implementation of the technical solution. The beneficial effects of the basic embodiment are that: three groups of data of the concentration of the particles, the concentration of the metal particles, and the concentration of the non-metal particles in the fluid can be obtained by the device via one measurement, and thus the detection efficiency may be improved. Meanwhile, the improvement of each device of the system may also effectively improve the detection efficiency and accuracy.

For convenience of the description of the text and drawings, the implementations of the metal particle detection device and the particle morphology detection device are shown below in more specific and different embodiments, respectively. The non-metallic particle detection system may be any combination of the following embodiments of each metal particle detection device and each particle morphology detection system, that is, only the preferred embodiments of the metal particle detection device and the particle morphology detection device are shown separately, and the combination of the metal particle detection device and the particle morphology detection device is not shown. The non-metallic particle detection system may be a combination of any preferred implementations of the metal particle detection device and the particle morphology detection device.

The method of acquiring information of the concentration of the non-metallic particles may comprise: acquiring information of the concentration of the metal particles in the fluid and information of the concentration of the particles in the fluid obtained respectively by the metal particle detection device and the particle morphology detection device, and subtracting the information of the concentration of the metal particles in the fluid from the information of the concentration of the particles in the fluid, thereby obtaining the information of the concentration of the non-metallic particles.

Embodiment 2 (the metal particle detection device in the system for detecting the concentration of the non-metallic particles in the fluid)

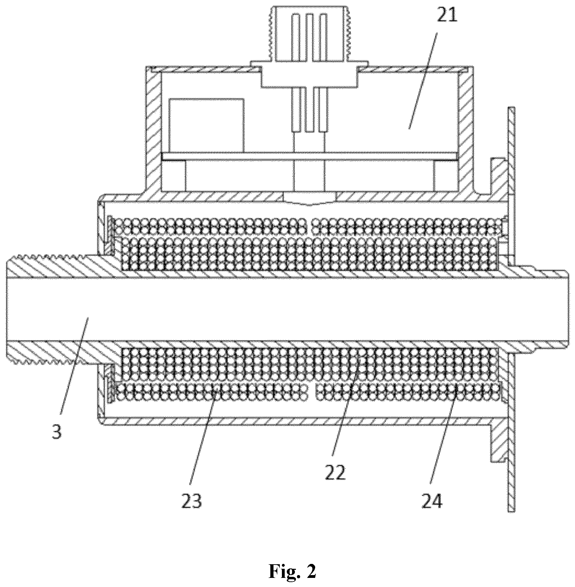

As shown in Fig. 2, a schematic cross-sectional structure diagram of a first preferred embodiment of the metal particle detection device in the system of the present disclosure is illustrated.

The metal particle detection device includes a signal detection system 21, one excitation coil 22, and two induction coils (a first induction coil 23 and a second induction coil 24, respectively). The excitation coil may be connected to the signal detection system and may be wound on the detection pipeline; the induction coils are all connected to the signal detection system and are wound on the excitation coil sequentially and in reverse to each other.

The above is one of the preferred embodiments of the technical solution. The basic implementation may have the following beneficial effects:

(1) With the installation of the induction coils being wound outside of the excitation coils of the metal particle detection device, convenient installation may be achieve and the overall length of the sensor may be greatly shortened, which is convenient for preparation and use;

(2) The induction coils are wound on the detection pipeline, the situation of the particles to be measured may be detected without directly contacting the sensor with the liquid in the pipeline, making the detection more convenient;

(3) The induction coils are sequentially wound on the excitation coil, and the magnetic field disturbance generated when the particles passes through the induction coils may be quickly detected, such that the function of detecting the metal particles may be achieved;

(4) The induction coils are wound on the excitation coil in reverse. Due to the proximity of the two induction coils, the environment can be considered consistent, which can suppress temperature drift and electromagnetic interference in a complex and harsh environment, such that signal stability may be improved and system performance may be further improved.

In this embodiment, the number of the excitation coil may be one, which is used to generate the magnetic field. In other embodiments, the number of the excitation coils may be two or more, but the excitation coils need to be wound in a same direction to prevent mutual interference of the magnetic fields which affects the measurement effect.

In this embodiment, the number of the induction coils may be two. With this setting, the detection accuracy may be effectively improved, such that the detection effect may be better. Alternatively, in other embodiments, the number of the induction coils may be an even number, for example, four, six or more, on the one hand, the same detection effect may be achieved, on the other hand, multiple measurements can be taken to obtain an average value, and the reliability of the detection may be improved.

In this embodiment, the material of the detection pipeline may be a non-magnetic material; more specifically, the material of the detection pipeline may be stainless steel. The material of the pipeline may use the non-magnetic material, in order to accurately measure the magnetic field disturbance generated by the metal particles on the excitation coil. In the test process, it is necessary to ensure that the magnetic field generated by the excitation coil passes through the middle of the pipeline as much as possible to increase the magnetic field strength in the pipeline. It is more preferable to use non-magnetic stainless steel material, which can meet the requirements, but it is not limited to this material.

Embodiment 3 (the metal particle detection device in the system for detecting the concentration of the **non-metallic particles in the fluid**)

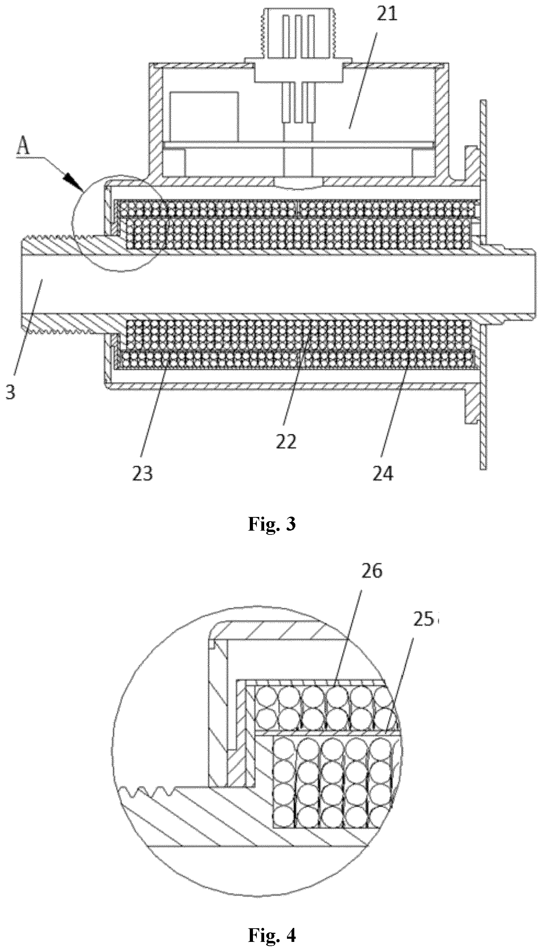

As shown in Fig. 3, a schematic cross-sectional structure diagram of a second preferred embodiment of the metal particle detection device in the detection system of the present disclosure is illustrated. The difference between this embodiment and the above example 2 is that: as shown in Fig. 4, a spacer ring sleeve 25 may be further disposed between the excitation coil and the induction coils, that is, the excitation coil is sheathed with the spacer ring sleeve, and the induction coils are wound on the spacer ring sleeve. Also, a shield ring 26 may be further disposed outside the induction coils.

The above two technical solutions may be implemented together or separately as needed. In this embodiment, both solutions are implemented, that is, the spacer ring sleeve and the shield ring are both provided, which is a more preferred embodiment.

For the spacer ring sleeve, on the one hand, it is mainly used for the isolation of the excitation coil and the induction coils during the winding of the production process; on the other hand, the spacer ring sleeve may serve as a skeleton for winding the induction coils, which can improve the flatness of the wound induction coils. Further, the spacer ring sleeve may be made of a non-magnetic material. In the process of inducing the magnetic field disturbance caused by the metal particles, the magnetic field loss between the induction coils and the excitation coils may be minimized. It is beneficial to improve the detection accuracy of the metal particles, so the non-magnetic material is selected here.

For the shield ring, the shield ring disposed outside the induction coils may isolate the external magnetic field and resist the interference of the external magnetic field, so that the detection results may be more accurate and the detection effect may be better.

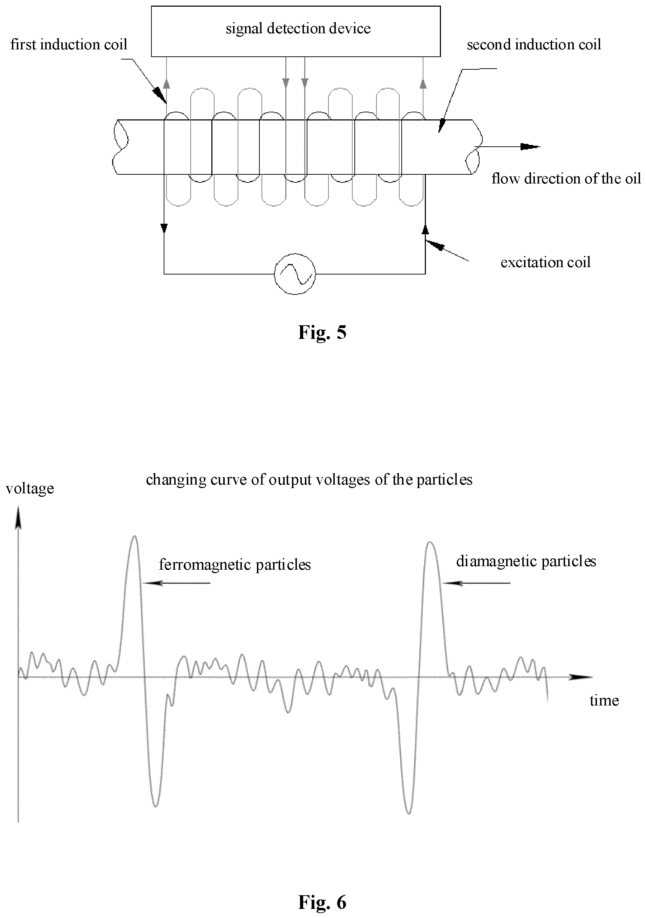

The implementation principles of the device are described below by way of example using the settings in the above embodiments with reference to Fig. 5 and Fig. 6.

By inputting a sinusoidal alternating signal at both ends of the excitation coil, an alternating magnetic field can be generated; with the alternating magnetic field, an alternating signal may be generated at both ends of the induction coils.

According to the magnetic permeability of the material, metal materials can be roughly divided into diamagnetic materials (<1), paramagnetic materials (>1), and ferromagnetic materials (>>1). Wherein, diamagnetic materials may decrease the strength of the magnetic field, paramagnetic materials may increase the strength of the magnetic field, and ferromagnetic materials may greatly increase the strength of the magnetic field. On the circuit, by connecting the reverse output ends of the two induction coils, the output signals of the other two ends may be measured. When no metal particle passes through the inside of the excitation coil, the induction signals of the two induction coils reversely cancel, and the overall output of the system is zero. When a metal particle (a ferromagnetic material) passes through the inside of the excitation coil from left to right, the process may be divided into the following processes:

(1) During the process of the metal particle entering the first induction coil, the first induction coil may change more sensitively to cause the voltage value to rise first, and the second induction coil may change more slowly. Therefore, at this time, a rising positive voltage may be output across the induction coils;
(2) As the metal particle approaching the middle position between the first induction coil and the second induction coil, the second induction coil may be also affected. At this time, the voltage generated by the first induction coil may be gradually balanced by the voltage generated by the second induction coil. Further, the voltage output by the induction coils may be gradually decreased, and may be decreased to 0 when the metal particle is located in the middle position between the first induction coil and the second induction coil;
(3) When metal particle has passed through the first induction coil and is entering into the second induction coil, the voltage value of the second induction coil may be higher than that of the first induction coil, such that a negative voltage may appear, and the negative voltage amplitude may continue to increase;
(4) When the metal particle is passing through the second induction coil and flows out, the influence on the second induction coil may be gradually weakened, the voltage amplitude may be gradually decreased. Further, the voltage amplitude may approach 0 when the metal particle has passed through the second induction coil for a certain distance.

According to the principle of electromagnetic induction, when a metal particle passes through the oil pipeline from left to right, the sensor device may detect a signal similar to a sine wave, the amplitude may be proportional to the size of the particle, and the period may be proportional to the flow velocity of the particle, such that the flow velocity may be calculated.

Example 4 (the particle morphology detection device in the system for detecting the concentration of the non-metallic particles in the fluid)

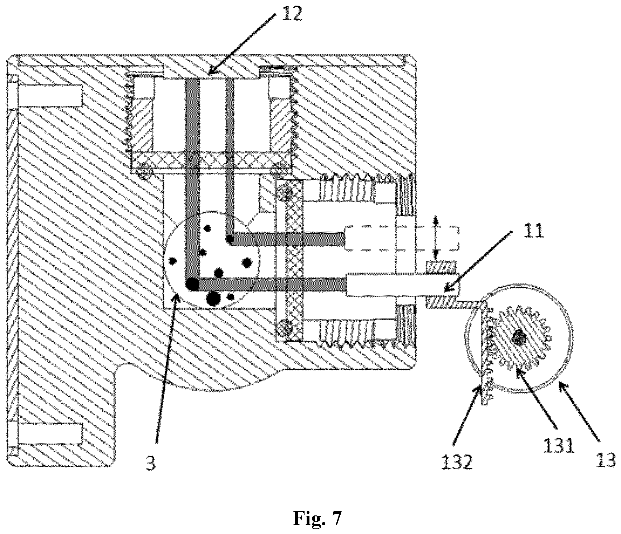

As shown in Fig. 7, a schematic structural diagram of a preferred embodiment of the particle morphology detection device in the detection system of the present disclosure is illustrated, which includes: a detection pipeline 3 that allows incidence of a light beam to the fluid in the detection pipeline and emergence of the light beam from the fluid; a laser tube 11 for outputting an incident light beam; and a scatter detector 12 for detecting a scattered light beam.
The scatter detector may be disposed at a position in a vertical plane of the output beams of the laser tube, and three position points of the scatter detector, the detection pipeline, and the laser tube may form a right-angle shape.
The particle morphology detection device may further include a motor 13 as a driving device, and the motor may be connected to the laser tube to drive the laser tube to move. The motor may drive the laser tube to move via a gear 131 and a rack 132.
The specific working process of the particle morphology detection device may be as follows.
At the initialization of the particle morphology detection device, the laser tube may be controlled by the motor, gear, and rack to locate at the bottom of the stroke, the liquid at the bottom of the pipeline may be detected, and the distribution of the particles in the bottom layer may be analyzed. Then, the laser tube may be controlled by the driving program of the motor to move at a constant speed. The laser light path may move and scan in the pipeline, and the output signals of the photodetector may be collected at the same time to analyze the situation of the particles in different layers of the pipeline and realize the function of dynamically analyzing the distribution of the particles in the pipeline. For particles of different sizes, such as relatively small particles a and relatively large particles b in the figure, because that the difference in mass will cause the particles being located in different layers, the particle morphology detection device may move the incident beams to cover the fluid in the detection pipeline, and the different particles may be subjected to different scattering and transmission, such that the detection results of the photodetector may be more comprehensive and accurate, and the detection accuracy of the transparency and concentration of the particles in the fluid may be further improved.
In this embodiment, the laser tube may be set to be movable, and thus the light beams output by the laser tube can cover the detection pipeline, such that the particles passing through the entire detection pipeline may be detected and the technical effect of improving the detection accuracy may be further achieved.
In this embodiment, the movement mode of the laser tube may be a gear movement. In other embodiments, the movement mode may be a screw movement.
In this embodiment, the movement range of the laser tube may be the diameter distance of the cross section of the detection pipe. The movement range of the laser tube may be set to the diameter distance of the cross section of the detection pipe, which can cover the detection pipe to a greater extent, such that the fluid in the pipe can be fully covered by the light beams, and thus a full detection of each layer of the particles may be achieved and the detection accuracy may be improved. In other embodiments, the movement range may be determined according to specific conditions, and may not be limited to the preferred implementation of this embodiment.

In this embodiment, a movement of the laser tube may be a movement at a constant speed. In the process of the movement at the constant speed, the sampled signals of the particles will be relatively stable, such that the detection and analysis results may be more accurate.

In this embodiment, in order to reduce the interference of the light beams and make the detection of the scattered light beams more accurate, the scatter detector may be disposed at a position in a vertical plane of the laser tube, and three position points of the scatter detector, the detection pipeline, and the laser tube may form a right-angle shape. In other preferred embodiments, the above-mentioned technical effect can also be achieved when the disposed position of the scatter detector is not on a same straight line as the output beams of the laser tube.

**Example 5 (A method for detecting a concentration of non-metallic particles in a fluid)**

A method for detecting a concentration of non-metallic particles in a fluid using the system described above is provided, wherein the method includes the following steps:

S 1: detecting a concentration of particles in the fluid, including:

S11: introducing a pure fluid into the detection pipeline, and acquiring a scattered background noise value $U_{background-noise}$ output by the particle morphology detection device;

S12: introducing the fluid under test into the detection pipeline, acquiring a scattered signal output by the particle morphology detection device, and acquiring a voltage signal of a standard particle;

S13: performing signal sampling on the fluid for a period of time, extracting a valid signal $U_x$ from sampled signals, and performing a threshold analysis on the valid signal $U_x$ obtained by sampling to obtain a number of particles appearing during the period of time;

S14: acquiring the concentration of the particles in the fluid based on the number of the particles acquired in S13; and,

S2: detecting a concentration of metal particles in the fluid, including:

S21: acquiring an output signal of the signal detection system to obtain a voltage amplitude change;

S22: detecting the concentration of the metal particles based on the obtained voltage amplitude change; and,

S3: detecting the concentration of the non-metallic particles in the fluid, including:

acquiring the concentration of the particles in the fluid obtained in S 1 and the concentration of the metal particles in the fluid obtained in S2, and acquiring the concentration of the non-metallic particles in the fluid by subtraction: the concentration of the non-metallic particles in the fluid = the concentration of the particles in the fluid - the concentration of the metal particles in the fluid.

The period of time in S1 may refer to any period of time, which can be selected according to actual conditions.

The above is the basic implementation of the detection method. In order to solve the technical defects mentioned in the background art and achieve a more accurate detection of the concentration of the non-metallic particles in the fluid, the inventor has made the following improvements. (1) The particle morphology detection device is improved and applied, and the detection accuracy of the concentration of the particles in the fluid is improved. (2) The metal particle detection device is improved, and the detection accuracy of the concentration of the metal particles in the fluid is improved. (3) The method of detecting the concentration of the particles in the fluid is improved, including acquiring the scattered background noise value $U_{background-noise}$ output by the detection device, and removing the influence of the background noise value in the subsequent detection and calculation processes, such that the accuracy of the detection and calculation of the concentration of the particles in the fluid is improved. With the above improvements, the detection accuracy of the concentration of the non-metallic particles in the fluid may be improved.

The above is one of the preferred embodiments of the basic implementation of the technical solution. The beneficial effects of the basic embodiment may be that: three groups of data of the concentration of the particles, the concentration of the metal particles, and the concentration of the non-metal particles in the fluid can be obtained by the device via one measurement, and thus the detection efficiency may be improved. Meanwhile, the improvement of each device of the system may also effectively improve the detection efficiency and accuracy.

For convenience of the description of the text and drawings, the implementations of the method for detecting the concentration of the metal particles and the method for detecting the concentration of the particles in the fluid are shown below in more specific and different embodiments, respectively. The method for detecting the concentration of the non-metallic particles may be any combination of the following embodiments of the method for detecting the concentration of the metal particles and the method for detecting the concentration of the particles in fluid, that is, only the preferred embodiments of the method for detecting the concentration of the metal particles and the method for detecting the concentration of the particles are shown separately, and the combination of the method for detecting the concentration of the metal particles and the method for detecting the concentration of the particles is not shown. The method for detecting the concentration of the non-metallic particles may be a combination of any preferred implementations of the method for detecting the concentration of the metal particles and the method for detecting the concentration of the particles.

**Embodiment 6 (the method for detecting the concentration of the particles in the fluid in the method for detecting the concentration of the non-metallic particles in the fluid)**

This embodiment is a preferred embodiment of the method for detecting the concentration of the particles in the fluid in the method for detecting the concentration of the non-metallic particles in the solution. In S1, a particle with a particle diameter of $10\mu m$ may be selected as the standard particle, and the voltage signal corresponding to the standard particle may be $U_{10\mu m}$.

In the process of actually selecting the standard particle, if the particles are too large, the detection accuracy of the subsequent calculated concentration will be reduced, and if the particles are too small, the detection sensitivity of the device will be reduced, resulting in the situation that the particles cannot be detected. Therefore, the inventor uses the particle with the diameter of $10\mu m$ as the standard particle to effectively balance the detection accuracy and the detection sensitivity. On the one hand, the detection accuracy may be improved, and on the other hand, the detection sensitivity may be improved.

With reference to the above embodiments, in one of the preferred embodiments, the extracting the valid signal may include: comparing the sampled signals with the scattered background noise value and selecting a signal greater than the scattered background noise value as the valid signal.

The sampled signals may be compared with the previously acquired scattered background noise value, and a signal greater than the scattered background noise value may be used as the valid signal, so that the sampled signals may be more practical, and the subsequent measurement results may be more accurate.

With reference to the above embodiments, in one of the preferred embodiments, the acquiring the number of the particles by threshold analysis in S13 may include:

comparing the sampled signals $U_x$ with the scattered background noise value $U_{background-noise}$; incrementing a count of the number of particles by 1 when $U_x - U_{background-noise} > 0$; and incrementing the count of the number of particles by 0, and when $U_X - U_{background-noise} < 0$.

In this step, the inventor preferably chooses a counting way of comparing the signal values with the background noise value rather than counting the numbers read from the signal values, which can eliminate errors caused by the background noise value. Only when $U_x - U_{background-noise} > 0$, the signals may be counted as particles, such that the detection results may be more accurate and the detection accuracy of the concentration of the particles may be improved.

With reference to the above embodiment, in another preferred embodiment, the acquiring the concentration of the particles in S14 may include:

S141: calculating a volume $V_x$ of an unknown particle:

$$V_X = K * V_{10\mu m} * \sqrt{\frac{U_X - U_{background-noise}}{U_{10\mu m} - U_{background-noise}}} \quad ,$$

wherein $V_x$ may be the volume of the unknown particle; K may be a sensor correction coefficient; $V_{10\mu m}$ may be a volume of the standard particle; Ux may be an output voltage amplitude value of the unknown particle; $U_{10\mu m}$ may be an output voltage amplitude value of the standard particle;

S142: acquiring the concentration of the particles in the fluid:

acquiring a flow velocity $v$ of the fluid and a cross-sectional area S of the detection pipeline, converting the number of the particles appearing during the period of time t and the volumes of the particles into a total mass $m_{total}$, and obtaining the concentration $c_{total}$ of the particles by the following formula:

$$c_{total} = \frac{m_{total}}{v * t_{total} * S} \quad .$$

In this step, the consideration of removing the influence of the background noise value may be included, so that the detection results may be more accurate. For example, the calculation formula of the particles may include the

factors of $U_x$ minus $U_{background-noise}$ and $U_{10\mu m}$ minus $U_{background-noise}$, such that the calculated volume of the particle may be closer to the actual value and the calculation accuracy of the concentration of the particles in the fluid may be improved.

The calculation process of the total mass $m_{total}$ may be as follows.

The mass of an individual particle may be calculated by:

$$m = \rho * V \quad .$$

Here, the particle may be assumed to be a common particle in the fluid, and its relative density can be used to calculated the mass of the individual particle.

Based on the calculation of the individual particle, the total mass of the particles in the current period of time may be obtained by accumulating the masses of the individual particles in the current period of time:

$$M = \sum_{i=1}^{N} m_i \quad .$$

Example 7 (the method for detecting the concentration of the metal particles in the fluid in the method for detecting the concentration of the non-metallic particles in the fluid)

This embodiment is a preferred embodiment of the method for detecting the concentration of the metal particles in the fluid in the method for detecting the concentration of the non-metallic particles in the fluid in the solution. The detecting the concentration of the metal particles in S2 may include:

acquiring a flow velocity $v_{metal}$ of the metal particles passing through the induction coils;
acquiring a mass $m_{metal}$ of the metal particles;
based on the flow velocity $v_{metal}$, the mass $m_{metal}$ of the metal particles, a period of passing time $t_{metal}$ and the cross-sectional area S of the detection pipeline, calculating the concentration $c_{metal}$ of the metal particles by the following formula:

$$c_{metal} = \frac{m_{metal}}{v_{metal} * t_{metal} * S} \quad .$$

In a more preferred embodiment, the acquiring the flow velocity $v_{metal}$ of the metal particles may include:

recording respectively a time instant when a voltage amplitude value as measured by the signal detection system when the metal particles pass through a set of induction coils is at a highest point of a positive half cycle and a time instant when the voltage amplitude value is at a zero-crossing point, and calculating a time difference $\Delta T1$ and a corresponding length L1 of the induction coils; recording respectively a time instant when the voltage amplitude value is at a zero-crossing point and a time instant when the voltage amplitude value is at a highest point of a negative half cycle, and calculating a time difference $\Delta T2$ and a corresponding length L2 of the induction coils; measuring the flow velocity based on a formula:

$$v_{metal} = \frac{\frac{k1 * L1}{\Delta T1} + \frac{k2 * L2}{\Delta T2}}{2} \quad .$$

In the output signal, there are too many zero-crossing detection points, which may cause errors in the actual sampling process. Therefore, in this method, the highest points of the positive and negative half cycles of the signal may be selected as the time recording point for flow velocity analysis.

In the process of the particles passing through the oil pipeline, the length L of the pipeline may be fixed, and the sampling times T1, T2, T3 may be extracted, wherein T1 is the time instant when the signal passes through the highest point of the positive half cycle, T2 is the time instant when the signal passes through the zero-crossing point, and T3 is the time instant when the signal passes through the highest point of the negative half cycle, as shown in Fig. 5; the flow velocity may be obtained by:

14

$$v = K * \frac{L}{\Delta T} \quad .$$

Because that different factors (for example, the wire (thickness and materials) of each oil sensor, the number of turns of the wound coils, the interaction of the two induction coils, etc.) may affect the output signals and the output signals are not in the middle of the induction coils, such that the correction coefficient K may be introduced to correct it. At the same time, the analysis may be performed on the time periods of T1 to T2 and T2 to T3, and the average flow velocity may be obtained to reduce errors.

$$v_1 = K * \frac{L}{2 * (T_2 - T_1)}$$

$$v_2 = K * \frac{L}{2 * (T_3 - T_2)}$$

$$v = \frac{v_1 + v_2}{2}$$

Wherein, L is the total length of the induction coil, L/2 is the length of the coil passed by the particle in two half cycles.

The above flow velocity is the calculated when the particle passes through a set of induction coils.

In the output signal, the amplitude of the signal may be related to the size of the metal particle. When the cylindrical metal particle passes through the inside of the spiral pipeline at a constant speed, the induced electromotive force may be generated by:

$$E = -4k\mu_0\mu_r n^3 V I_0 v \quad .$$

Wherein k is a system correction coefficient, n is a density of the turns of the coil (the number of winding turns per unit length = total turns/total length), V is the volume of the particle, and v is the flow velocity of the particle.

In a single-layer densely wound coil, the induced voltage E caused by the metal particle passing through the spiral induction coil may be proportional to the volume V of the particle, the magnetic permeability, and the flow velocity v, and may be proportional to the third power of the number of turns of the wound coil. With quantitative analysis of the output signals of the sensor, the volume and mass of the metal particle passing through the oil pipeline can be converted. Under the condition that the flow velocity v of the oil is obtained, the concentration of the metal particle may be measured as follows.

Knowing the cross-sectional area S of the pipeline, the period of time t, and the total mass m converted by using the number and sizes of the metal particles obtained by the amplitude of the output signals, the concentration of the metal particles may be obtained by the formula:

$$c_{metal} = \frac{m_{metal}}{v_{metal} * t_{metal} * S} \quad .$$

In a further preferred embodiment, a frequency of acquiring the output signal of the signal detection system in S21 maybe once every 1ms.

The beneficial effects of the frequency of acquiring being once every 1ms may be that: the frequency of the output signal may be 500Hz, and according to the sampling theorem, the sampling frequency must be greater than twice the highest frequency of the signal in order to retain the complete information of the signal without distortion, so the sampling frequency of 1K is selected here, that is, 1000 valid signals (1ms each) are sampled within ls for analysis.

In a preferred embodiment, when there are multiple sets of the induction coils, the flow velocity $v_{metal}$ of the metal particles passing through the induction coils may be an average value of flow velocities of the metal particles passing through each set of the induction coils.

For example, in S1, the flow velocity vgn (wherein n is a positive integer) of the metal particles passing through the gn[th] set of the induction coils may be calculated respectively, and the flow velocity $v_{metal}$ is an average value of the flow velocities of each set of induction coils:

$$v_{metal} = \frac{vg1 + vg2 + \cdots + vgn}{n} \quad .$$

The method of calculating the average value can improve the calculation accuracy of the flow velocity and make the calculation results more accurate.

The above-mentioned embodiments are only preferred embodiments of the present disclosure, which cannot be used to limit the protection scope of the present disclosure. The protection scope is defined by the appended set of claims.

**Claims**

1. A system for detecting a concentration of non-metallic particles in a fluid, wherein the system comprises a particle morphology detection device (1), a metal particle detection device (2) and a detection pipeline (3), the particle morphology detection device (1) and the metal particle detection device (2) are connected to each other and are wound on the detection pipeline (3);

   the particle morphology detection device (1) comprises: a laser tube (11) for outputting an incident light beam; the metal particle detection device (2) comprises a signal detection system (21), one or more excitation coils (22), the excitation coils (22) are connected to the signal detection system (21) and are wound on the detection pipeline (3);
   the detection pipeline (3) allows incidence of a light beam from the particle morphology detection device (1) to the fluid in the detection pipeline (3) and emergence of the light beam from the fluid to the particle morphology detection device (1), **characterized in that**
   the particle morphology detection device (1) further comprises: a scatter detector (12) for detecting an emergent light beam from the fluid;
   the metal particle detection device (2) further comprises: a positive even number of induction coils (23, 24); the induction coils (23, 24) are all connected to the signal detection system (21) and are wound on the excitation coils (22) sequentially and in reverse to each other.

2. A method for detecting a concentration of non-metallic particles in a fluid using the system according to claim 1, wherein the method comprises the following steps:

   S1: detecting a concentration of particles in the fluid, comprising:

   S11: introducing a pure fluid into the detection pipeline (3), and acquiring a scattered background noise value $U_{background-noise}$ output by the particle morphology detection device (1);
   S12: introducing the fluid under test into the detection pipeline (3), acquiring a scattered signal output by the particle morphology detection device (1), and acquiring a voltage signal of a standard particle;
   S13: performing signal sampling on the fluid for a period of time, extracting a valid signal $U_x$ from sampled signals, and performing a threshold analysis on the valid signal $U_x$ obtained by sampling to obtain a number of particles appearing during the period of time;
   S14: acquiring the concentration of the particles in the fluid based on the number of the particles acquired in S13; and

   S2: detecting a concentration of metal particles in the fluid, comprising:

   S21: acquiring an output signal of the signal detection system (21) to obtain a voltage amplitude change;
   S22: detecting the concentration of the metal particles based on the obtained voltage amplitude change; and

   S3: detecting the concentration of the non-metallic particles in the fluid, comprising:
   acquiring the concentration of the particles in the fluid obtained in S1 and the concentration of the metal particles in the fluid obtained in S2, and acquiring the concentration of the non-metallic particles in the fluid by subtraction:
   the concentration of the non-metallic particles in the fluid = the concentration of the particles in the fluid - the concentration of the metal particles in the fluid.

3. The method of claim 2, wherein in S1, a particle with a particle diameter of 10μm is selected as the standard particle, and the voltage signal corresponding to the standard particle is $U_{10\mu m}$.

4. The method of claim 2 or 3, wherein in S1, the extracting the valid signal comprises: comparing the sampled signals with the scattered background noise value and selecting a signal greater than the scattered background noise value as the valid signal.

5. The method of any one of claims 2-4, wherein the performing the threshold analysis to obtain the number of the particles in S13 comprises:

   comparing the sampled signals $U_x$ with the scattered background noise value $U_{background-noise}$;
   incrementing a count of the number of particles by 1 when $Ux - U_{background-noise} > 0$; and
   incrementing the count of the number of particles by 0, and when $Ux - U_{background-noise} < 0$.

6. The method of any one of claims 2-5, wherein the step of acquiring the concentration of the particles in S14 comprises:

   S141: calculating a volume $V_x$ of an unknown particle:

   $$V_X = K * V_{10\mu m} * \sqrt{\frac{U_X - U_{background-noise}}{U_{10\mu m} - U_{background-noise}}} \quad ,$$

   wherein $V_x$ is the volume of the unknown particle; K is a sensor correction coefficient; $V_{10\mu m}$ is a volume of the standard particle; $Ux$ is an output voltage amplitude value of the unknown particle; $U_{10\mu m}$ is an output voltage amplitude value of the standard particle;
   S142: acquiring the concentration of the particles in the fluid:
   acquiring a flow velocity $v$ of the fluid and a cross-sectional area S of the detection pipeline (3), converting the number of the particles appearing during the period of time t and the volumes of the particles into a total mass $m_{total}$, and obtaining the concentration $c_{total}$ of the particles is able to be obtained by the following formula:

   $$c_{total} = \frac{m_{total}}{v * t_{total} * S} \quad .$$

7. The method of any one of claims 2-6, wherein the detecting the concentration of the metal particles in S2 comprises:

   acquiring a flow velocity $v_{metal}$ of the metal particles passing through the induction coils (23, 24);
   acquiring a mass $m_{metal}$ of the metal particles;
   based on the flow velocity $v_{metal}$, the mass $m_{metal}$ of the metal particles, a period of passing time $t_{metal}$ and the cross-sectional area S of the detection pipeline (3), calculating the concentration $c_{metal}$ of the metal particles by the following formula:

   $$c_{metal} = \frac{m_{metal}}{v * t_{metal} * S} \quad .$$

8. The method of any one of claims 2-7, wherein in S2, the acquiring the flow velocity $v_{metal}$ of the metal particles comprises:

   recording respectively a time instant when a voltage amplitude value as measured by the signal detection system (21) when the metal particles pass through a set of induction coils (23, 24) is at a highest point of a positive half cycle and a time instant when the voltage amplitude value is at a zero-crossing point, and calculating a time difference ΔT1 and a corresponding length L1 of the induction coils (23, 24); recording respectively a time instant when the voltage amplitude value is at a zero-crossing point and a time instant when the voltage amplitude value is at a highest point of a negative half cycle, and calculating a time difference ΔT2 and a corresponding length L2 of the induction coils (23, 24);
   measuring the flow velocity based on a formula:

$$v_{metal} = \frac{\frac{k1 * L1}{\Delta T1} + \frac{k2 * L2}{\Delta T2}}{2} \qquad .$$

9. The method of any one of claims 2-8, wherein when there are multiple sets of induction coils (23, 24), the flow velocity v$_{metal}$ of the metal particles passing through the induction coils (23, 24) is an average value of flow velocities of the metal particles passing through each set of the induction coils (23, 24).

10. The method of any one of claims 2-9, wherein a frequency of acquiring the output signal of the signal detection system (21) in S21 is once every 1ms.

**Patentansprüche**

1. System zum Erfassen einer Konzentration von nichtmetallischen Partikeln in einer Flüssigkeit, wobei das System eine Partikelmorphologie-Erfassungsvorrichtung (1), eine Metallpartikel-Erfassungsvorrichtung (2) und eine Erfassungspipeline (3) umfasst, die Partikelmorphologie-Erfassungsvorrichtung (1) und Metallpartikel-Erfassungsvorrichtung (2) miteinander verbunden und auf die Erfassungspipeline (3) gewickelt sind;

die Partikelmorphologie-Erfassungsvorrichtung (1) umfasst: eine Laserröhre (11) zum Ausgeben eines einfallenden Lichtstrahls;
die Metallpartikel-Erfassungsvorrichtung (2) ein Signalerfassungssystem (21), eine oder mehrere Erregerspulen (22) umfasst, die Erregerspulen (22) mit dem Signalerfassungssystem (21) verbunden und auf die Erfassungspipeline (3) gewickelt sind;
die Erfassungspipeline (3) den Einfall eines Lichtstrahls von der Partikelmorphologie-Erfassungsvorrichtung (1) auf die Flüssigkeit in der Erfassungspipeline (3) und den Austritt des Lichtstrahls aus der Flüssigkeit auf die Partikelmorphologie-Erfassungsvorrichtung (1) ermöglicht, **dadurch gekennzeichnet, dass**
die Partikelmorphologie-Erfassungsvorrichtung (1) ferner umfasst: einen Streuungsdetektor (12) zum Erfassen eines aus der Flüssigkeit austretenden Lichtstrahls;
die Metallpartikel-Erfassungsvorrichtung (2) ferner umfasst: eine positive gerade Anzahl von Induktionsspulen (23, 24); die Induktionsspulen (23, 24) alle mit dem Signalerfassungssystem (21) verbunden sind und auf die Erregerspulen (22) sequentiell und umgekehrt zueinander gewickelt sind.

2. Verfahren zum Erfassen einer Konzentration von nichtmetallischen Partikeln in einer Flüssigkeit unter Verwendung des Systems nach Anspruch 1, wobei das Verfahren die folgenden Schritte umfasst:

S1: Erfassen einer Konzentration von Partikel in der Flüssigkeit, umfassend:

S11: Einführen einer reinen Flüssigkeit in die Erfassungspipeline (3) und Erfassen eines durch die Partikelmorphologie-Erfassungsvorrichtung (1) ausgegebenen, gestreuten Hintergrundrauschwerts U$_{Hintergrundrauschen}$;
S12: Einführen der zu testenden Flüssigkeit in die Erfassungspipeline (3), Erfassen eines durch die Partikelmorphologie-Erfassungsvorrichtung (1) ausgegebenen, gestreuten Signal und Erfassen eines Spannungssignals eines Standardpartikels;
S13: Durchführen einer Signalabtastung an der Flüssigkeit für eine Zeitdauer, Extrahieren eines gültigen Signals U$_x$ aus abgetasteten Signalen und Durchführen einer Schwellenwertanalyse an dem durch Abtasten erhaltenen gültigen Signal U$_x$, um eine Anzahl von Partikeln zu erhalten, die während der Zeitdauer erscheinen;
S14: Erfassen der Konzentration der Partikel in der Flüssigkeit basierend auf der in S13 erhaltenen Anzahl der Partikel;
und

S2: Erfassen einer Konzentration von Metallpartikeln in der Flüssigkeit, umfassend:

S21: Erfassen eines Ausgangssignals des Signalerfassungssystems (21), um eine Spannungsamplitudenänderung zu erhalten;
S22: Erfassen der Konzentration der Metallpartikel basierend auf der erhaltenen Spannungsamplitudenänderung; und

S3: Erfassen der Konzentration der nichtmetallischen Partikel in der Flüssigkeit, umfassend:
Erfassen der in S1 erhaltenen Konzentration der Partikel in der Flüssigkeit, und der in S2 erhaltenen Konzentration der Metallpartikel in der Flüssigkeit, und Erfassen der Konzentration der nichtmetallischen Partikel in der Flüssigkeit durch Subtraktion:
die Konzentration der nichtmetallischen Partikel in der Flüssigkeit = die Konzentration der Partikel in der Flüssigkeit - die Konzentration der Metallpartikel in der Flüssigkeit.

3. Verfahren nach Anspruch 2, wobei in S1 ein Partikel mit einem Partikeldurchmesser von $10\mu m$ als Standardpartikel ausgewählt wird und das dem Standardpartikel entsprechende Spannungssignal $U_{10\mu m}$ ist.

4. Verfahren nach Anspruch 2 oder 3, wobei in S1 das Extrahieren des gültigen Signals umfasst: Vergleichen der abgetasteten Signale mit dem Wert des gestreuten Hintergrundrauschens und Auswählen eines Signals, das größer als der Wert des gestreuten Hintergrundrauschens ist, als das gültige Signal.

5. Verfahren nach einem der Ansprüche 2-4, wobei das Durchführen der Schwellenwertanalyse zum Erhalten der Anzahl der Partikel in S13 umfasst:

Vergleichen der abgetasteten Signale $U_x$ mit dem Wert des gestreuten Hintergrundrauschens $U_{\text{Hintergrundrauschen}}$;
Inkrementieren einer Zählung der Anzahl von Partikeln um 1, wenn $U_x - U_{\text{Hintergrundrauschen}} > 0$ ist; und
Inkrementieren der Zählung der Anzahl der Partikel um 0, und wenn $U_x - U_{\text{Hintergrundrauschen}} < 0$ ist.

6. Verfahren nach einem der Ansprüche 2-5, wobei der Schritt des Erfassens der Konzentration der Partikel in S14 umfasst:

S141: Berechnung eines Volumens $V_x$ eines unbekannten Partikels:

$$V_X = K * V_{10\mu m} * \sqrt{\frac{U_X - U_{\text{Hintergrundrauschen}}}{U_{10\mu m} - U_{\text{Hintergrundrauschen}}}} \quad,$$

wobei $V_x$ das Volumen des unbekannten Partikels ist; K ein Sensorkorrekturkoeffizient ist; $V_{10\mu m}$ ein Volumen des Standardpartikels ist; $U_x$ ein Amplitudenwert der Ausgangsspannung des unbekannten Partikels ist; $U_{10\mu m}$ ein Amplitudenwert der Ausgangsspannung des Standardpartikels ist;
S142: Erfassen der Konzentration der Partikel in der Flüssigkeit:
Erfassen einer Strömungsgeschwindigkeit v der Flüssigkeit und einer Querschnittsfläche S der Erfassungspipeline (3), Umrechnen der Anzahl der während der Zeitdauer t erscheinenden Partikel und des Volumens der Partikel in eine Gesamtmasse $m_{\text{Summe}}$, und Erhalten von die Konzentration $c_{\text{Summe}}$ der Partikel sich nach folgender Formel ermitteln lässt:

$$c_{Summe} = \frac{m_{Summe}}{v * t_{Summe} * S} \quad.$$

7. Verfahren nach einem der Ansprüche 2-6, wobei das Erfassen der Konzentration der Metallpartikel in S2 umfasst:

Erfassen einer Strömungsgeschwindigkeit $v_{\text{Metall}}$ der Metallpartikel, die durch die Induktionsspulen (23, 24) gehen;
Erfassen einer Masse $m_{\text{Metall}}$ der Metallpartikel;
basierend auf der Strömungsgeschwindigkeit $v_{\text{Metall}}$, der Masse $m_{\text{Metall}}$ der Metallpartikel, einer Zeitdauer zum Durchgehen $t_{\text{Metall}}$ und der Querschnittsfläche S der Erfassungspipeline (3), Berechnen der Konzentration $c_{\text{Metall}}$ der Metallpartikel nach folgender Formel:

$$c_{Metal} = \frac{m_{Metal}}{v * t_{Metal} * S} \quad.$$

8. Verfahren nach einem der Ansprüche 2-7, wobei in S2 das Erfassen der Strömungsgeschwindigkeit $v_{\text{Metall}}$ der

Metallpartikel umfasst:

Aufzeichnen jeweils eines Zeitpunkts, zu dem sich ein Spannungsamplitudenwert, wie er von dem Signalerfassungssystem (21) gemessen wird, wenn die Metallpartikel durch einen Satz von Induktionsspulen (23, 24) gehen, an einem höchsten Punkt einer positiven Halbwelle befindet, und eines Zeitpunkts, zu dem sich der Spannungsamplitudenwert an einem Nulldurchgangspunkt befindet, und Berechnen einer Zeitdifferenz ΔT1 und einer entsprechenden Länge L1 der Induktionsspulen (23, 24); Aufzeichnen eines Zeitpunkts, zu dem sich der Spannungsamplitudenwert an einem Nulldurchgangspunkt befindet, und eines Zeitpunkts, zu dem sich der Spannungsamplitudenwert an einem höchsten Punkt einer negativen Halbwelle befindet, und Berechnen einer Zeitdifferenz ΔT2 und einer entsprechenden Länge L2 des Induktionsspulen (23, 24);
Messung der Strömungsgeschwindigkeit nach einer Formel:

$$v_{Metal} = \frac{\frac{k1 * L1}{\Delta T1} + \frac{k2 * L2}{\Delta T2}}{2} \quad .$$

9. Verfahren nach einem der Ansprüche 2 bis 8, wobei, wenn mehrere Sätze von Induktionsspulen (23, 24) vorhanden sind, die Strömungsgeschwindigkeit $v_{Metall}$ der Metallpartikel, die durch die Induktionsspulen (23, 24) gehen, ein Durchschnittswert der Strömungsgeschwindigkeiten der Metallpartikel ist, die durch jeden Satz der Induktionsspulen (23, 24) gehen.

10. Verfahren nach einem der Ansprüche 2 bis 9, wobei eine Frequenz des Erfassens des Ausgangssignals des Signalerfassungssystems (21) in S21 einmal alle 1ms beträgt.

## Revendications

1. Système de détection de concentration de particules non métalliques dans un fluide, dans lequel le système comprend un dispositif de détection de morphologie particulaire (1), un dispositif de détection de particules métalliques (2) et une tuyauterie de détection (3), le dispositif de détection de morphologie particulaire (1) et le dispositif de détection de particules métalliques (2) étant connectés l'un à l'autre et étant enroulés sur la tuyauterie de détection (3) ;

le dispositif de détection de morphologie particulaire (1) comprend : un tube laser (11) pour émettre un faisceau lumineux incident ;
le dispositif de détection de particules métalliques (2) comprend un système de détection de signal (21), une ou plusieurs bobines d'excitation (22), les bobines d'excitation (22) étant connectées au système de détection de signal (21) et étant enroulées sur la tuyauterie de détection (3) ;
la tuyauterie de détection (3) permet d'une incidence d'un faisceau lumineux du dispositif de détection de morphologie particulaire (1) vers le fluide dans la tuyauterie de détection (3) et d'une émergence du faisceau lumineux du fluide vers le dispositif de détection de morphologie particulaire (1), **caractérisé en ce que,**
le dispositif de détection de morphologie particulaire (1) comprend en outre : un détecteur de diffusion (12) pour détecter un faisceau lumineux émergent du fluide ;
le dispositif de détection de particules métalliques (2) comprend en outre : un nombre pair positif de bobines d'induction (23, 24) ; chacune des bobines d'induction (23, 24) étant connectée au système de détection de signal (21) et étant enroulée sur les bobines d'excitation (22) de manière séquentielle et dans le sens inverse l'un de l'autre.

2. Procédé de détection de concentration de particules non métalliques dans un fluide utilisant le système selon la revendication 1, dans lequel le procédé comprend les étapes suivantes :

S1 : détecter une concentration de particules dans le fluide, comprenant :

S11 : introduire un fluide pur dans la tuyauterie de détection (3), et acquérir une valeur de bruit de fond de diffusion $U_{backgromid\text{-}noise}$ émis par le dispositif de détection de morphologie particulaire (1) ;
S12 : introduire le fluide à tester dans la tuyauterie de détection (3), acquérir un signal de diffusion émis par le dispositif de détection de morphologie particulaire (1), et acquérir un signal de tension d'une particule de référence ;

S13 : effectuer un échantillonnage de signal sur le fluide pendant une durée, extraire un signal valide $U_x$ des signaux échantillonnés et effectuer une analyse de seuil sur le signal valide $U_x$ obtenu par l'échantillonnage, afin d'obtenir un nombre de particules apparaissant pendant la durée ;

S14 : acquérir la concentration des particules dans le fluide en fonction du nombre de particules acquises à S13 ;

et

S2 : détecter une concentration de particules métalliques dans le fluide, comprenant :

S21 : acquérir un signal de sortie du système de détection de signal (21) pour obtenir une variation d'amplitude de tension ;

S22 : détecter la concentration des particules métalliques sur la base de la variation d'amplitude de tension obtenue ;

et

S3 : détecter une concentration des particules non métalliques dans le fluide, comprenant :

acquérir la concentration des particules dans le fluide obtenu à S1 et la concentration des particules métalliques dans le fluide obtenu à S2, et acquérir la concentration des particules non métalliques dans le fluide par soustraction :

la concentration des particules non métalliques dans le fluide = la concentration des particules dans le fluide - la concentration des particules métalliques dans le fluide.

3. Procédé selon la revendication 2, dans lequel à S1, une particule ayant un diamètre de $10\mu$m est sélectionnée comme particule de référence, et un signal de tension correspondant à la particule de référence est $U_{10\mu m}$.

4. Procédé selon la revendication 2 ou 3, dans lequel à S1, l'extraction du signal valide consiste en : comparer les signaux échantillonnés avec la valeur de bruit de fond de diffusion et sélectionner un signal supérieur à la valeur de bruit de fond de diffusion comme signal valide.

5. Procédé selon l'une quelconque des revendications 2 à 4, dans lequel, effectuer une analyse de seuil pour obtenir un nombre de particules à S13 comprend :

comparer les signaux échantillonnés avec la valeur de bruit de fond de diffusion $U_{backgromid-noise}$ ;

incrémenter un compte du nombre de particules de 1 lorsque $U_x - U_{backgromid-noise} > 0$ ; et

incrémenter un compte du nombre de particules de 0 lorsque $U_x - U_{backgromid-noise} < 0$.

6. Procédé selon l'une quelconque des revendications 2 à 5, dans lequel, acquérir la concentration des particules à S14 comprend :

S141 : calculer un volume $V_x$ d'une particule inconnue :

$$V_x = K * V_{10\mu m} * \sqrt{\frac{U_X - U_{backgromid-noise}}{U_{10\mu m} - U_{backgromid-noise}}}$$

où $V_x$ est le volume de la particule inconnue ; K est un coefficient de correction du capteur ; $V_{10\mu m}$ est un volume de la particule de référence ; $U_x$ est une valeur d'amplitude de tension de sortie de la particule inconnue ; et $U_{10\mu m}$ est une valeur d'amplitude de tension de sortie de la particule de référence ;

S142 : acquérir une concentration de particules métalliques dans le fluide :

acquérir une vitesse de débit v du fluide et une section transversale S de la tuyauterie de détection (3), convertir le nombre de particules apparaissant pendant la durée t et les volumes des particules en une masse totale $m_{total}$, et obtenir la concentration $c_{total}$ des particules qui peut être obtenue en fonction de la formule suivante :

$$c_{total} = \frac{m_{total}}{V * t_{total} * S}$$

**7.** Procédé selon l'une quelconque des revendications 2 à 6, dans lequel, détecter la concentration des particules à S2 comprend :

acquérir une vitesse de débit $v_{metal}$ des particules métalliques passant à travers les bobines d'induction (23, 24) ;
acquérir une masse $m_{metal}$ des particules métalliques ;
calculer, en fonction de la vitesse de débit $v_{metal}$, de la masse $m_{metal}$ des particules métalliques, d'une durée de passage $t_{metal}$ et de la section transversale S de la tuyauterie de détection (3), la concentration $c_{metal}$ des particules métalliques en fonction de la formule suivante :

$$c_{metal} = \frac{m_{metal}}{V * t_{metal} * S}$$

**8.** Procédé selon l'une quelconque des revendications 2 à 7, dans lequel, acquérir la vitesse de débit $v_{metal}$ des particules métalliques à S2 comprend :

enregistrer respectivement un moment où une valeur d'amplitude de tension mesurée par le système de détection de signal (21) lorsque les particules métalliques traversent un ensemble de bobines d'induction (23, 24) correspond au point le plus haut d'un demi-cycle positif et un moment où la valeur d'amplitude de tension correspond à un point de passage par zéro, et calculer une différence temporelle ΔT1 et une longueur correspondante L1 des bobines d'induction (23, 24) ; enregistrer respectivement un moment où la valeur d'amplitude de tension correspond à un point de passage par zéro et un moment où la valeur d'amplitude de tension correspond à un point le plus haut d'un demi-cycle négatif, et calculer une différence temporelle ΔT2 et une longueur correspondante L2 de les bobines d'induction (23, 24) ;
mesurer la vitesse de débit en fonction d'une formule :

$$v_{metal} = \frac{\frac{k1 * L1}{\Delta T1} + \frac{k2 * L2}{\Delta T2}}{2}$$

**9.** Procédé selon l'une quelconque des revendications 2 à 8, dans lequel lorsqu'il existe une pluralité d'ensembles de bobines d'induction (23, 24), la vitesse de débit $v_{metal}$ des particules métalliques passant à travers les bobines d'induction (23, 24) est une valeur moyenne des vitesses de débit des particules métalliques passant à travers chaque ensemble de bobines d'induction (23, 24).

**10.** Procédé selon l'une quelconque des revendications 2 à 9, dans lequel une fréquence d'acquisition du signal de sortie du système de détection de signal (21) à S21 est d'une fois par 1 ms.

**Fig. 1A**

**Fig. 1B**

**Fig. 2**

**Fig. 3**

**Fig. 4**

**Fig. 5**

**Fig. 6**

**Fig. 7**

**EP 3 722 781 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102486448 A

- CN 202002870 U